# EUROPEAN PATENT SPECIFICATION

(11) **EP 2 694 565 B1**
(45) Date of publication and mention of the grant of the patent: **18.07.2018**
(21) Application number: 12719030.4
(22) Date of filing: 10.04.2012
(51) Int. Cl.: C08G 18/61, C08G 77/458, C08G 77/56, F41H 5/06

(54) **INTERPENETRATING DILATANT POLYMER NETWORK FOR IMPACT PROTECTION**
INTERPENETRIERENDES DILATANTES POLYMERNETZWERK FÜR AUFPRALLSCHUTZ
RÉSEAU POLYMÈRE INTERPÉNÉTRÉ À FLUIDE DILATANT PROTÉGEANT CONTRE LES CHOCS

(30) Priority: 08.04.2011 GB 201106016
(43) Date of publication of application: 12.02.2014
(73) Proprietor: Heales Enterprises Limited, Luton, Bedfordshire LU3 3AH (GB)
(72) Inventor: SWANTON, Eamonn, Luton, Bedfordshire LU3 3AH (GB); SHMELIN, George, Luton, Bedfordshire LU3 3AH (GB)
(74) Representative: Avidity IP
(86) International application number: PCT/GB2012/050786
(87) International publication number: WO 2012/137020

(56) References cited:
- WO-A2-03/055339

## Description

The present invention relates to polymer materials especially polymers capable of resisting impacts or other applied forces.

Impact protection materials for use in protective equipment have often employed elastomeric materials, for example in the form of elastomers or foams, to provide resilient materials which allow for the absorption of impact forces across a relatively large area.

Such elastomeric materials may also be used in a composite with a more rigid material which may assist in the spreading of the impact force across a relatively large area. However, such rigid materials, when used in the field of personal protective equipment, may impede the free movement of the wearer.

Rheopectic materials are forms of non-Newtonian fluids which undergo an increasing viscosity the longer those materials are exposed to a shearing force. Similarly, dilatant materials are also non-Newtonian fluids which exhibit a time independent increase in viscosity when exposed to shear forces.

As is understood by those skilled in the art, rheopectic and dilatant materials absorb energy from shear forces as their viscosities increase, redissipating that energy once the shear force reduces or ceases.

Designers of protective equipment have sought to include rheopectic or dilatant materials in their products at least in part because of these properties of energy absorption and of remaining flexible or fluid when not exposed to shear forces. These materials also tend to be lighter than the usual alternatives which is a further advantage.

Such attempts include the provision of dilatant or rheopectic materials in laminates of more conventional protective materials, for example KEVLAR®.

The inventors have devised a practical alternative to the use of such laminates.

In a first aspect, the invention utilizes an interpenetrating polymer network or a semi interpenetrating polymer network comprising first and second network polymers, wherein at least the first polymer comprises a rheopectic and/or a dilatant material.

According to this aspect of the present invention there is provided impact resistant polymer material comprising an interpenetrating or semi interpenetrating polymer network of first and second network polymers, wherein:
at least the first network polymer comprises a rheopectic and/or a dilatant material having a tensile strength of XMPa when extended to 2% deformation at 1 Hz, and a tensile strength of at least X + 3 MPa when extended to 2% deformation at 10 Hz; and
the first network polymer comprises polydialkyl siloxane wherein at least some of the siloxane repeat units comprise first and second alkyl substituents, wherein said second alkyl substituent comprises straight C₃ to C₁₀ alkyl chains, and wherein the second network polymer is bonded to the first network polymer by the second alkyl substituent.

The terms "rheopectic" and "dilatant", as used to herein, refer to a material which exhibits a tensile strength of XMPa when extended to 2% deformation at 1 Hz, and a tensile strength of at least X+3MPa when extended to 2% deformation at 10Hz.

Further preferred and optimal features of the invention are to be found amongst the sub claims and discussed below.

Preferably, the polydialkyl siloxane of the first network polymer comprises polydimethyl siloxane.

Preferably the first polymer comprises a crosslinking portion which preferably comprises a borate group.

In some embodiments the siloxane repeat units of the polydialkyl siloxane are substituted with straight C₅ alkyl chains.

At least some of the siloxane repeat units comprise a first alkyl substituent and a second alkyl substituent. Preferably, the first alkyl substituent is a methyl substituent. Preferably, the second alkyl substituent comprises a C₃ to C₁₀ straight alkyl chain, e.g. a pentyl substituent.

In some embodiments some or all of the siloxane repeat units comprise different alkyl substituents to one or both of their neighbouring siloxane repeat units.

Preferably, a mean of at least 4 siloxane groups which do not comprise the second alkyl substituent separate siloxane groups which comprise the second alkyl substituent. More preferably, a mean of between 5 and 30

(*e.g*. 10 to 20) siloxane groups which do not comprise the second alkyl substituent separate siloxane groups which comprise the second alkyl substituent.

Preferably, the first network polydialkyl siloxane polymer comprises a block of first siloxane repeat units having substantially the same alkyl substituents.

Preferably, the polydialkyl siloxane comprises a block of second siloxane repeat units having substantially the same alkyl substituents and where at least one of said alkyl substituents is different to at least one of the alkyl substituents of the first siloxane repeat unit.

Preferably, the second network polymer comprises urethane links.

Preferably, the second network polymer comprises polyether links.

Preferably, in some embodiments the second network polymer is not bonded, e.g. covalently bonded, to the first polymer network, but is inseparable therefrom.

Preferably, in other embodiments the second network polymer is bonded, e.g. covalently bonded to the first polymer network.

Preferably, the second polymer is bonded to the first polymer by urethane links, e.g. urethane-urea links.

A further aspect of the invention provides a polymer network comprising a first network polymer comprising a polydialkylsiloxane and a second network polymer comprising a urethane, wherein the first and second network polymers are bonded there being a single such bond to every 500g to 5000g of the first network polymer.

Preferably, the first polymer comprises a single bond to the second polymer in every 300g/mol block to 3000g/mol block of the second polymer.

Preferably, the first polymer comprises a single bond to the second polymer in every 500 g/mol block to 2000 g/mol block of the second polymer, for example 800 g/mol block to 1800 g/mol block, e.g. 900 g/mol block to 1600 g/mol block of the second polymer.

Preferably, the first polymer comprises bonds to the second polymer positioned on at least some of the alkyl substituents.

In a further aspect, the invention provides protective material, e.g. body armour, comprising an interpenetrating polymer network or semi interpenetrating polymer according to the first aspect.

In a second aspect, the invention provides a method for manufacturing impact resistant polymer material comprising interpenetrating polymer network or a semi interpenetrating polymer network which method involves:
- at least partially cross-linking a polydialkyl siloxane;
- introducing a second polymer precursor to the at least partially cross- linked polydialkyl siloxane;
- at least partially polymerising and/or crosslinking the second polymer precursor,
wherein the polydialkyl siloxane comprises siloxane repeat units substituted with first and second alkyl substituents wherein said second alkyl substituent comprises C₃ to C₁₀ straight chain alkyl substituents, and wherein at least a portion of those alkyl substituents comprise first reactive groups that are hydroxyl groups.

Preferably the polydialkyl siloxane is cross-linked by reaction with one or more boric acids and/or boronic acids or esters of boric or boronic acids.

Preferably, the polydialkyl siloxane is formed by hydrolysis of one or more alkylhalosilanes,e.g. dialkylhalosilanes, and/or by hydrolysis of alkyl siloxanes, e.g. mono- or dialkyl siloxanes.

Preferably, the one or more alkylhalosilanes are formed by Grignard reactions of haloalkanes with one or more halosilanes or alkylhalosilanes, e.g. monoalkyltrihalosilanes or dialkyldihalosilanes.

In alternative embodiments, the one or more alkyhalosilanes are formed by hydrosilylation.

In some embodiments, the first reactive hydroxyl groups of the alkyl substituents of the polydialkyl siloxane may be reacted with a second reactive group, e.g. an isocyanate such as diisocyanate or polyisocyanate.

Preferably some or all of the alkyl substituents of the polydialkyl siloxane comprising the first reactive groups comprise straight C₃ to C₁₀ *(e.g.* C₅) alkyl chains.

Preferably, the second polymer precursor comprises a polyether or polyurethane polymer.

In preferred embodiments, the second polymer precursor comprises a polyether-co-polyurethane polymer.

Preferably, the second polymer precursor comprises at least a first crosslinkable polymer.

Additionally or alternatively, the second polymer precursor comprises one or more monomers.

Preferably, the first crosslinkable polymer comprises a partially crosslinked polymer, e.g. a polyether-co-polyurethane polymer.

Preferably, the partially crosslinked polymer comprises a polyether-co-polyurethane polymer partially crosslinked by glycerol, or glycerol based compound, e.g. castor oil.

Preferably, the second polymer precursor is crosslinked by reacting some or all of the first and/or second (if present) reactive groups of the polydialkyl siloxane polymer.

Preferably, the partially crosslinked polymer terminates in amine and/or isocyanate groups.

Preferably, the polymer precursor comprises a further, preferably linear, polymer species, the further polymer species preferably terminating in amine and/or isocyanate groups.

Preferably, the further polymer species comprises a polyether polymer.

In order that the invention be more fully understood, it will now be described by way of example only.

The present invention relates to composite materials and their manufacture. In certain embodiments, those materials comprise interpenetrating polymer networks (IPNs) having a rheopectic and/or dilatant first polymer network interpenetrated with a rigid/elastic polymer network.

In one preferred embodiment, the invention comprises an IPN of a borane cross-linked polydialkyl siloxane and a polyurethane.

The polydialkyl siloxane was prepared in three stages.

### Stage 1

In a first step, 0.97g Grignard grade magnesium turnings (0.04 mole), 45ml diethyl ether (about 0.4 mole), 9.2g 1,5-Dibromopentane (0.04 mole), 6.0g trichloromethyl silane (0.04 mole) and 5.2g dichloromethyl (0.04 mole) silane were consecutively introduced to a dry vessel and stirred at around 200 rpm for 15 minutes at around 15°C, using an ice-bath to reduce and/or control the temperature where required.

The liquid first becomes yellow then quickly turns a cloudy grey.

The frequency of the stirring was then reduced to 70 rpm for a further five minutes.

The temperature of the liquid was maintained at or below 24°C by use of an ice bath, as required.

The liquid was then stirred at 20°C for one hour at 120 to 150 rpm.

A white powder of bromomagnesium chloride and some particles of magnesium were visible in the flask.

The temperature was increased to around 27°C and the mixture was stirred at 500 to 700 rpm for 2 hours until the reaction reached completion.

The temperature of the vessel was reduced until ice-cold.

### Stage 2

In a second stage, 650ml ice-cold water was introduced to a vessel and stirred in an ice bath at 1000 rpm. The contents of the reaction vessel of the first stage was then slowly introduced to the cold water.

Remaining white salt left in the first stage was washed with diethyl ether which was then also introduced to the cold water.

The stirring was continued for around 3 to 4 minutes before being stopped. The vessel was then left without agitation for around 10 minutes to effect a phase separation.

The organic layer was collected and washed with concentrated sodium chloride until its pH increased to 7, and again separated.

The organic layer was then dried at 70°C under constant stirring and was further stirred under vacuum at ambient temperature for 15 minutes.

The resultant colourless oil was a mixture of cyclo and linear siloxane oligomers.

FTIR spectra: Si-Me 1260cm⁻¹ - very strong sharp peak; OH 3400cm⁻¹ - strong wide absorption; CH₂-H bond (in Me) 2962cm⁻¹ -strong sharp peak (about 30% of magnitude of the Si-Me peak); 2900cm⁻¹ and 2860cm⁻¹ strong sharp absorption peaks of methylene groups of pentanol attached to a siloxane chain (about 50% of magnitude of the Si-Me peak).

### Stage 3

0.5g boric acid was dissolved in 20ml distilled water at 70°C in a covered beaker, to which mixture is added 30ml tetra hydro furan.

Stirring was continued after the boric acid was dissolved, to which solution was added 2.2g di-hydroxyl terminated polydimethyl siloxane (average M_{W} 550. The temperature of the mixture was increased to 150°C and the mixture was stirred for a further 10 minutes.

The siloxane oil produced in Stage 2 was added over the course of 10 minutes under continuous stirring. The temperature of the mixture was raised to 160°C for around 10 to 15 minutes.

The temperature of the mixture was then further raised to 175°C for 15 minutes, again under continuous stirring. The cover of the vessel was removed in order to allow excess solvent to evaporate and the, by now, viscous solution was stirred with a spatula around every 5 minutes.

The boiling water and THF created bubbles on the surface of the siloxane mass, first of around 5mm in the diameter and less than a second in lifetime, later, as the viscosity increased, up to 20mm in diameter and 5 to 10 seconds in lifetime.

The resultant siloxane putty was cooled to room temperature and washed in water to remove unreacted boric acid and/or pentanol residues. The putty was then dried.

FTIR spectra: Si-Me 1260cm⁻¹ - very strong sharp peak; OH 3400cm⁻¹ - strong wide absorption; CH2-H bond (in Me) 2962cm⁻¹ -strong sharp peak; 2900cm⁻¹ and 2860cm⁻¹ strong sharp absorption peaks of methylene groups of the pentanol attached to a siloxane chain; 1400-1600cm⁻¹ due to a Si-O-B-O- frequencies).

The putty contained oligomeric siloxane chains linked by borate groups, the siloxane chains containing intermittent pentanol groups attached thereby. The siloxane chains contained one reactive carbon hydroxyl group on approximately each 900 g/mol block.

### Stage 4a

7.9g of the putty produced in Stage 3 was dissolved in 20ml dry THF in a dry conical flask. 1.39g technical grade tolylene-2, 4-diisocyanate (80%)/tolylene-2, 6-diisolcyanate (20%) (TDI) was added to the flask.

The flask was covered and the mixture stirred for 10 minutes.

The mixture was then heated to 85°C for 50 minutes to form an isocyanate ended prepolymer.

The solution was cooled until ice-cold. Additional THF and methyl ethyl ketone was added to reduce the viscosity of the mixture.

### Stage 4b

Simultaneously, 2.7g caster oil a, 0.22g polyethylene glycol (M_{W} approx 1500), 1.39g TDI, 20ml dry THF and 20ml dry ethyl methyl ketone were mixed for 10 minutes in a covered dry conical flask. The combine sum of all castor oil reactive groups and polyethylene glycol hydroxyl groups is 0.8 mol by reactive ends as compared to 1 mole of one of isocyanate groups of the TDI.

The mixture was then heated to 85°C and stirred for 50 minutes to form an isocyanate ended prepolymer.

The solution was cooled until ice-cold. Additional THF and ethylmethyl ketone was added to reduce the viscosity.

While it is to be appreciated that TDI was used in Stages 4a and 4b any compound having an isocyanate functional group (-N=C=O) may be used, such as any diisocyanate or polyisocyanate.

### Stage 5

2g poly(propylene glycol)-block-poly(ethylene glycol)-block-poly(propylene glycol) bis(2-aminopropyl ether) (PPO/PPE) of average M_{W} 2000 and 0.11g 1, 6-diaminohexane were dissolved in 100ml THF and 50ml ethyl methyl ketone in an ice-cold, dry conical flask.

Both prepolymers from Stages 4a and 4b were added to the mixture and stirring continued at 500 rpm for 5 minutes, with the mixture remaining ice-cold. This provided a molar ratio of 2 isocyanate groups on the prepolymers to 1 primary amine group on the PPO/PPE.

The mixture was then poured into a polytetrafluoroethylene (PTFE) mould of around 20mm in diameter. The solvent was allowed to evaporate slowly, preventing the formulation of bubbles in the polymer. The polymer was then left in the mould in dry conditions at 25°C for 24 hours. A cloudy yellow polymeric tablet (circa 18g) was formed in the mould.

The tablet was further dried for one week in cool, dry conditions, whereupon its weight had reduced to around 16g.

The tablet was then placed in an oven at 95°C for 2 hours to complete the polymerisation.

The resulting tablet was a soft poly(boron-siloxane)/polyurethane IPN.

### Test 1

The rheopectic properties of the tablet were tested by cutting the tablet into a strip 12.5mm long by 5.6mm wide by 0.1mm thick. The strip was loaded into a PerkinElmer DMA 8000 mechanical analyser, where it was placed under oscillatory stress at 2% deformation and a variety of frequencies.

The sample exhibited good rheopectic properties: a tensile modulus of 6MPa at 2% deformation at 1Hz and below, about 60MPa at 2% deformation at 25 Hz, 40MPa at 2% deformation at 37-50Hz and about 1GPa at 2% deformation at 75-90Hz.

### Test 2

The strength of the sample was measured in the mechanical analyser by measuring the tensile force applied at the point of failure. The sample exhibited a tear resistance of ≥0.7GPa.

As is understood by those skilled in the art, it is possible to form various shaped articles (for example body armour) from the material by, for example, performing Stage 5 of the synthesis in a mould.

## Claims

1. Impact resistant polymer material comprising an interpenetrating or semi interpenetrating polymer network of first and second network polymers, wherein:
at least the first network polymer comprises a rheopectic and/or a dilatant material having a tensile strength of XMPa when extended to 2% deformation at 1 Hz, and a tensile strength of at least X + 3 MPa when extended to 2% deformation at 10 Hz; and
the first network polymer comprises polydialkyl siloxane wherein at least some of the siloxane repeat units comprise first and second alkyl substituents, wherein said second alkyl substituent comprises straight C₃ to C₁₀ alkyl chains, and wherein the second network polymer is bonded to the first network polymer by the second alkyl substituent.

2. The polymer material according to claim 1, wherein the first alkyl substituent, comprises a methyl substituent,

3. The polymer material according to claim 1, wherein said second alkyl substituent comprises C₃ or C₅ straight alkyl chains.

4. The polymer material according to claim 1, wherein the first network polymer is bonded to the second network polymer by urethane links.

5. The polymer material according to any preceding claim wherein the first network polymer comprises a crosslinking portion comprising a borate group.

6. A protective material comprising impact-resistant polymer as defined in any preceding claim, optionally wherein the first polymer network is interpenetrated with a rigid/elastic polymer network, or preferably comprising an IPN of a borane-crosslinked polydialkylsiloxane and a polyurethane.

7. A shaped article of protective material as claimed in claim 6, being impact protective material capable of resisting impacts or other applied forces.

8. A shaped article as claimed in claim 7 in the form of body armour.

9. A method for manufacturing impact resistant polymer material as defined in claim 1 comprising:
• at least partially cross-linking a polydialkyl siloxane;
• introducing a second polymer precursor to the at least partially cross-linked polydialkyl siloxane;
• at least partially polymerising and/or crosslinking the second polymer precursor,
wherein the polydialkyl siloxane comprises siloxane repeat units substituted with first and second alkyl substituents wherein said second alkyl substituent comprises C₃ to C₁₀ straight chain alkyl substituents, and wherein at least a portion of those alkyl substituents comprise first reactive groups that are hydroxyl groups.

10. A method as claimed in claim 9, wherein said second alkyl substituent comprises C₃ or C₅ straight alkyl chains.

11. A method according to claim 9 or 10, wherein:
the polydialkyl siloxane is cross-linked by reaction with one or more boric acids and/or boronic acids or esters of boric and/or boronic acids; and/or
the polydialkyl siloxane is formed by hydrolysis of one or more alkylhalosilanes and/or by hydrolysis of alkyl siloxanes.

12. A method according to claim 11, wherein the one or more alkylhalosilanes are formed by Grignard reaction of a haloalkane with one or more halosilanes or alkylhalosilanes.

13. A method according to claim 12, in which the haloalkane is 1,5-dibromopentane which is reacted with magnesium, trichloromethylsilane and dichloromethylsilane in equi-molar proportions.

14. A method according to any one of claims 9 to 13, wherein the method further comprises reacting the first reactive groups with a second reactive group, *e.g.* an isocyanate such as diisocyanate.

15. A method according to any of claims 9 to 14, wherein the second polymer precursor comprises a polyether, polyurethane or polyether-co-polyurethane polymer.

16. A method according to any of claims 9 to 15, wherein the second polymer precursor comprises at least a first crosslinkable polymer,
and optionally wherein the first crosslinkable polymer comprises a partially crosslinked polymer, e.g. a polyether-co-polyurethane polymer.

17. A method according to claim 16, wherein the partially crosslinked polymer comprises a polyether-co-polyurethane polymer partially crosslinked by glycerol, or glycerol based compound, e.g. castor oil.

18. A method according to any of claims 9 to 17, wherein the second polymer precursor is crosslinked by reacting some or all of the first and/or second (if present) reactive groups of the polydialkyl siloxane polymer, optionally wherein the partially crosslinked polymer terminates in amine and/or isocyanate groups.

## Patentansprüche

1. Schlagfestes Polymermaterial, umfassend ein interpenetrierendes oder halbinterpenetrierendes Polymernetzwerk aus ersten und zweiten Netzwerkpolymeren, wobei:
zumindest das erste Netzwerkpolymer ein rheopektisches und/oder ein dilatantes Material umfasst, das eine Zugfestigkeit von XMPa, wenn es zu 2 % Deformation bei 1 Hz erweitert ist, und eine Zugfestigkeit von zumindest X + 3 MPa, wenn es zu 2 % Deformation bei 10 Hz erweitert ist, aufweist; und
das erste Netzwerkpolymer Polydialkylsiloxan umfasst, wobei zumindest einige der Siloxanwiederholungseinheiten erste und zweite Alkylsubstituenten umfassen, wobei der zweite Alkylsubstituent gerade C₃- bis C₁₀-Alkylketten umfasst und wobei das zweite Netzwerkpolymer durch den zweiten Alkylsubstituenten an das erste Netzwerkpolymer gebunden ist.

2. Polymermaterial nach Anspruch 1, wobei der erste Alkylsubstituent einen Methylsubstituenten umfasst.

3. Polymermaterial nach Anspruch 1, wobei der zweite Alkylsubstituent gerade C₃- oder C₅-Alkylketten umfasst.

4. Polymermaterial nach Anspruch 1, wobei das erste Netzwerkpolymer durch Urethanverbindungen an das zweite Netzwerkpolymer gebunden ist.

5. Polymermaterial nach einem vorhergehenden Anspruch, wobei das erste Netzwerkpolymer einen Vernetzungsabschnitt umfasst, der eine Boratgruppe umfasst.

6. Schutzmaterial, umfassend schlagfestes Polymer nach einem vorhergehenden Anspruch, wobei optional das erste Polymernetzwerk mit einem steifen/elastischen Polymernetzwerk interpenetriert ist, oder vorzugsweise umfassend ein IPN eines mit Boran vernetzten Polydialkylsiloxans und ein Polyurethan.

7. Geformter Artikel aus Schutzmaterial nach Anspruch 6, wobei es sich um schlagfestes Material handelt, das dazu in der Lage ist, Stößen oder anderen ausgeübten Kräften zu widerstehen.

8. Geformter Artikel nach Anspruch 7 in der Form von Körperpanzer.

9. Verfahren zur Herstellung von schlagfestem Polymermaterial nach Anspruch 1, umfassend:
• zumindest teilweise Vernetzen eines Polydialkylsiloxans;
• Einführen eines zweiten Polymervorläufers in das zumindest teilweise vernetzte Polydialkylsiloxan;
• zumindest teilweise Polymerisieren und/oder Vernetzen des zweiten Polymervorläufers, wobei das Polydialkylsiloxan Siloxanwiederholungseinheiten umfasst, die mit ersten und
zweiten Alkylsubstituenten substituiert sind, wobei der zweite Alkylsubstituent geradkettige C₃-C₁₀-Alkylsubstituenten umfasst, und wobei zumindest ein Teil dieser Alkylsubstituenten erste reaktive Gruppen umfasst, die Hydroxylgruppen sind.

10. Verfahren nach Anspruch 9, wobei der zweite Alkylsubstituent gerade C₃- oder C₅-Alkylketten umfasst.

11. Verfahren nach Anspruch 9 oder 10, wobei:
das Polydialkylsiloxan durch Reaktion mit einer oder mehreren Borsäuren und/oder Boronsäuren oder Estern von Bor- und/oder Boronsäuren vernetzt ist; und/oder
das Polydialkylsiloxan durch Hydrolyse eines oder mehrerer Alkylhalosilane und/oder durch Hydrolyse von Alkylsiloxanen gebildet ist.

12. Verfahren nach Anspruch 11, wobei das eine oder die mehreren Alkylhalosilane durch Grignard-Reaktion eines Haloalkans mit einem oder mehreren Halosilanen oder Alkylhalosilanen gebildet sind.

13. Verfahren nach Anspruch 12, wobei das Haloalkan 1,5-Dibrompentan ist, das mit Magnesium, Trichlormethylsilan und Dichlormethylsilan in äquimolaren Anteilen reagiert wird.

14. Verfahren nach einem der Ansprüche 9 bis 13, wobei das Verfahren ferner das Reagieren der ersten reaktiven Gruppen mit einer zweiten reaktiven Gruppe umfasst, z. B. einem Isocyanat wie zum Beispiel Diisocyanat.

15. Verfahren nach einem der Ansprüche 9 bis 14, wobei der zweite Polymervorläufer ein Polyether, Polyurethan oder Polyether-Co-Polyurethan-Polymer umfasst.

16. Verfahren nach einem der Ansprüche 9 bis 15, wobei der zweite Polymervorläufer zumindest ein erstes vernetzbares Polymer umfasst,
und wobei optional das erste vernetzbare Polymer ein teilweise vernetztes Polymer umfasst, z. B. ein Polyether-Co-Polyurethan-Polymer.

17. Verfahren nach Anspruch 16, wobei das teilweise vernetzte Polymer ein teilweise durch Glycerol oder glycerolbasierte Verbindung, z. B. Rizinusöl, vernetztes Polyether-Co-Polyurethan-Polymer umfasst.

18. Verfahren nach einem der Ansprüche 9 bis 17, wobei der zweite Polymervorläufer vernetzt wird, indem die gesamten ersten und/oder zweiten (falls vorhanden) reaktiven Gruppen des Polydialkylsiloxanpolymers oder ein Teil davon reagiert werden, wobei optional das teilweise vernetzte Polymer in Amin- und/oder Isocyanatgruppen terminiert.

## Revendications

1. Matériau polymère résistant aux chocs comprenant un réseau polymère interpénétrant ou semi-interpénétrant de premier et second polymères réseaux, dans lequel :
au moins le premier polymère réseau comprend un matériau rhéopectique et/ou un matériau dilatant ayant une résistance à la traction de XMPa lorsqu'il est étendu à 2 % de déformation à 1 Hz, et une résistance à la traction d'au moins X + 3 MPa lorsqu'il est étendu à 2 % de déformation à 10 Hz ; et
le premier polymère réseau comprend du polydialkylsiloxane, au moins certaines des unités répétitives de siloxane comprenant des premier et second substituants alkyle, ledit second substituant alkyle comprenant des chaînes alkyle linéaires en C₃ à C₁₀, et le second polymère réseau étant lié au premier polymère réseau par le second substituant alkyle.

2. Matériau polymère selon la revendication 1, dans lequel le premier substituant alkyle comprend un substituant méthyle.

3. Matériau polymère selon la revendication 1, dans lequel ledit second substituant alkyle comprend des chaînes alkyle linéaires en C₃ ou C₅.

4. Matériau polymère selon la revendication 1, dans lequel le premier polymère réseau est lié au second polymère réseau par des liaisons uréthane.

5. Matériau polymère selon une quelconque revendication précédente, dans lequel le premier polymère réseau comprend une partie de réticulation comprenant un groupe borate.

6. Matériau de protection comprenant un polymère résistant aux chocs selon une quelconque revendication précédente, le premier réseau polymère étant facultativement interpénétré avec un réseau polymère rigide/élastique, ou comprenant de préférence un IPN d'un polydialkylsiloxane réticulé au borane et d'un polyuréthane.

7. Article en forme de matériau de protection selon la revendication 6, qui est un matériau de protection contre les chocs capable de résister aux chocs ou à d'autres forces appliquées.

8. Article façonné selon la revendication 7 sous la forme d'un vêtement pare-balles.

9. Procédé de fabrication d'un matériau polymère résistant aux chocs selon la revendication 1, comprenant :
• la réticulation au moins partielle d'un polydialkylsiloxane ;
• l'introduction d'un second précurseur polymère dans le polydialkylsiloxane au moins partiellement réticulé ;
• la polymérisation et/ou la réticulation au moins partielle du second précurseur polymère, le polydialkylsiloxane comprenant des unités répétitives de siloxane substituées par des premier et second substituants alkyle, ledit second substituant alkyle comprenant des substituants alkyle à chaîne linéaire en C₃ à C₁₀, et au moins une partie de ces substituants alkyle comprenant des premiers groupes réactifs qui sont des groupes hydroxyle.

10. Procédé selon la revendication 9, dans lequel ledit second substituant alkyle comprend des chaînes alkyle linéaires en C₃ ou C₅.

11. Procédé selon la revendication 9 ou 10, dans lequel :
le polydialkylsiloxane est réticulé par réaction avec un ou plusieurs acides boriques et/ou acides boroniques ou esters d'acides boriques et/ou boroniques ; et/ou
le polydialkylsiloxane est formé par hydrolyse d'un ou de plusieurs alkylhalosilanes et/ou par hydrolyse d'alkylsiloxanes.

12. Procédé selon la revendication 11, dans lequel les un ou plusieurs alkylhalosilanes sont formés par réaction de Grignard d'un haloalcane avec un ou plusieurs halosilanes ou alkylhalosilanes.

13. Procédé selon la revendication 12, dans lequel l'haloalcane est le 1,5-dibromopentane qui est mis en réaction avec du magnésium, du trichlorométhylsilane et du dichlorométhylsilane dans des proportions équimolaires.

14. Procédé selon l'une quelconque des revendications 9 à 13, dans lequel le procédé comprend en outre la réaction des premiers groupes réactifs avec un second groupe réactif, par exemple un isocyanate tel qu'un diisocyanate.

15. Procédé selon l'une quelconque des revendications 9 à 14, dans lequel le second précurseur polymère comprend un polymère polyéther, polyuréthane ou polyéther-co-polyuréthane.

16. Procédé selon l'une quelconque des revendications 9 à 15, dans lequel le second précurseur polymère comprend au moins un premier polymère réticulable,
et le premier polymère réticulable comprenant facultativement un polymère partiellement réticulé, par exemple un polymère polyéther-co-polyuréthane.

17. Procédé selon la revendication 16, dans lequel le polymère partiellement réticulé comprend un polymère polyéther-co-polyuréthane partiellement réticulé par le glycérol, ou un composé à base de glycérol, par exemple l'huile de ricin.

18. Procédé selon l'une quelconque des revendications 9 à 17, dans lequel le second précurseur polymère est réticulé par la réaction de tout ou partie des premier et/ou second (si présents) groupes réactifs du polymère polydialkylsiloxane, le polymère partiellement réticulé se terminant facultativement par des groupes amine et/ou isocyanate.
